Europäisches Patentamt

(19) European Patent Office

Office européen des brevets

(11) **EP 0 692 007 B1**

(12) **EUROPÄISCHE PATENTSCHRIFT**

(45) Veröffentlichungstag und Bekanntmachung des Hinweises auf die Patenterteilung:
**05.12.2001 Patentblatt 2001/49**

(51) Int Cl.⁷: **C09D 133/06**, B05D 7/26, C08F 220/18 // (C08F220/18, 220:28)

(21) Anmeldenummer: **94913060.3**

(22) Anmeldetag: **26.03.1994**

(86) Internationale Anmeldenummer:
**PCT/EP94/00965**

(87) Internationale Veröffentlichungsnummer:
**WO 94/22969 (13.10.1994 Gazette 1994/23)**

(54) **VERFAHREN ZUR HERSTELLUNG EINER ZWEISCHICHTIGEN DECKLACKIERUNG AUF EINER SUBSTRATOBERFLÄCHE**

PROCESS FOR APPLYING A DOUBLE-LAYERED COVERING LACQUER ON THE SURFACE OF A SUBSTRATE

PROCEDE D'APPLICATION D'UNE DOUBLE COUCHE DE LAQUE DE FINITION SUR LA SURFACE D'UN SUBSTRAT

(84) Benannte Vertragsstaaten:
**AT BE DE ES FR GB IT NL SE**

(30) Priorität: **31.03.1993 DE 4310414**

(43) Veröffentlichungstag der Anmeldung:
**17.01.1996 Patentblatt 1996/03**

(73) Patentinhaber: **BASF Coatings Aktiengesellschaft 48165 Münster (DE)**

(72) Erfinder:
• **RÖCKRATH, Ulrike D-48308 Senden (DE)**
• **WIGGER, Georg D-48151 Münster (DE)**
• **BARTOL, Fritz D-59071 Hamm (DE)**
• **BETZ, Peter D-48165 Münster (DE)**
• **BARTELT, Angelika D-48165 Münster (DE)**
• **STÜBBE, Wilfried D-48268 Greven (DE)**

(74) Vertreter: **Fitzner, Uwe, Dr. et al Dres. Fitzner & Münch Rechts- und Patentanwälte Lintorfer Strasse 10 40878 Ratingen (DE)**

(56) Entgegenhaltungen:
• **CHEMICAL ABSTRACTS, vol. 114, no. 16, 22. April 1991, Columbus, Ohio, US; abstract no. 145577, 'clear coating materials in two coat one bake coating process' Seite 110 ; & JP,A,2 245 268 (KANSAI PAINT KK)**

Bemerkungen:
Die Akte enthält technische Angaben, die nach dem Eingang der Anmeldung eingereicht wurden und die nicht in dieser Patentschrift enthalten sind.

## Beschreibung

Die Erfindung betrifft ein Verfahren zur Herstellung einer zweischichtigen Decklackierung auf einer Substratoberfläche, bei dem

(1) ein pigmentierter Basislack auf die Substratoberfläche aufgebracht wird,

(2) der in Stufe (1) aufgebrachte Basislackfilm getrocknet wird,

(3) auf den in Stufe (2) getrockneten Basislackfilm ein nichtwäßriger, transparenter Decklack, der

(A) ein hydroxylgruppenhaltiges Polyacrylatharz und

(B) ein Vernetzungsmittel

enthält, aufgebracht und anschließend

(4) Basislackschicht und Decklackschicht zusammen eingebrannt werden.

Die Erfindung betrifft auch nichtwäßrige Lakke, die insbesondere für das obenbeschriebene Verfahren geeignet sind.

Das obenbeschriebene Verfahren zur Herstellung einer zweischichtigen Lackierung des base-coat/clear-coat-Typs ist bekannt und wird vor allem zur Herstellung von zweischichtigen Decklackierungen, insbesondere zweischichtigen Metalleffektlackierungen auf Automobilkarosserien eingesetzt (vgl. z.B. US-A-3,639,147 und EP-A-38 127).
Mit dem base-coat/clear-coat-Verfahren sind Lackierungen herstellbar, die sich im Vergleich zu einschichtigen Decklackierungen durch eine verbesserte Effektgebung und durch die Möglichkeit, Lackierungen mit leuchtenderen und reineren Farbtönen herstellen, auszeichnen.

Der in Stufe (1) vorlackierte Basislack bestimmt, je nach Art, Menge und räumlicher Orientierung der eingesetzten Pigmente, den Farbton und ggf. den Effekt (z.B. Metalleffekt oder Perlglanzeffekt) der Lackierung.

In Stufe (2) des Verfahrens werden dem in Stufe (1) aufgebrachten Basislackfilm in einer Abdunstphase wenigstens ein Teil der organischen Lösemittel bzw. wenigstens ein Teil des Wassers entzogen. Auf diese vorgetrocknete, aber nicht eingebrannte Basislackschicht wird in Stufe (3) ein nichtwäßriger, transparenter Decklack aufgebracht (Naß-in-Naß-Verfahren) und in Stufe (4) werden dann Basislackschicht und Decklackschicht zusammen eingebrannt.

Der in Stufe (3) aufgebrachte transparente Decklack verleiht der Zweischichtlackierung Glanz und Fülle und schützt die in Stufe (1) aufgebrachte pigmentierte Lackschicht vor chemischen und physikalischen Angriffen.

Mit dem in Rede stehenden Verfahren können nur dann qualitativ hochwertige Zweischichtlackierungen erhalten werden, wenn der in Stufe (3) aufgebrachte transparente Decklack die in den Stufen (1) und (2) aufgebrachte Basislackschicht nicht so stört, daß es zu einer Verschlechterung des optischen Effektes (z.B. Wolkenbildung) kommt. Andererseits muß der transparente Decklack so zusammengesetzt sein, daß er nach dem in Stufe (4) durchgeführten Einbrennprozeß auf der Basislackschicht gut haftet. Weitere wichtige Eigenschaften, die die nach dem Einbrennprozeß erhaltene transparente Decklackschicht aufweisen muß, sind hohe Transparenz, guter Glanz und gute mechanische Eigenschaften, wie Härte, Kratzfestigkeit und Elastizität. Nicht zuletzt muß die nach dem Einbrennprozeß erhaltene transparente Decklackschicht eine hohe Widerstandsfähigkeit gegen klimatische Einflüsse (z.B. Temperaturschwankungen, Feuchtigkeit in Form von Wasserdampf, Regen, Tau, Belastung durch Strahlung usw.) und gegen Angriffe durch Säuren oder andere Chemikalien, wie z.B. organische Lösemittel aufweisen.

In der JP-A-1-158079 werden nichtwäßrige, transparente Decklacke für zweischichtige Decklackierungen des basecoat/clear-coat-Typs beschrieben, die ein hydroxylgruppenhaltiges Polyacrylatharz enthalten, das erhältlich ist, indem 10 bis 50 Gew.-% eines Adduktes aus einem cyclischen Ester, wie z.B. -Caprolacton und Hydroxyethylacrylat oder -methacrylat, 0 bis 40 Gew.-% eines Hydroxyalkylacrylats oder -methacrylats und 30 bis 80 Gew.-% eines copolymerisierbaren Vinylmonomeren zu einem Polyacrylatharz mit einer Hydroxylzahl von 60 bis 160, einer Säurezahl von 0 bis 40 und einer Glasübergangstemperatur von -50 bis +40°C polymerisiert werden. Die in der JP-A-1-158079 beschriebenen transparenten Decklacke liefern Lackierungen, die insbesondere hinsichtlich ihrer Säurebeständigkeit verbesserungsbedürftig sind.

Das Dokument JP-H2-245268 beschreibt einen Decklack basierend auf einem Acrylat gebildet aus 1,4-Butandiol-(meth)acrylat sowie auf einem Vernetzungsmittel. Dieser Decklack befriedigt noch nicht hinsichtlich der Kratzfestigkeit und Säurebeständigkeit.

Die Erfindung ist dadurch gekennzeichnet, daß in Stufe (3) ein nichtwäßriger, transparenter Decklack aufgebracht wird, der als Komponente (A) ein hydroxylgruppenhaltiges Polyacrylatharz und als Komponente (B) eine Mischung aus Aminoplastharz und Polyisocyanaten enthält, wobei das hydroylgruppenhaltige Polyacrylatharz erhältlich ist, indem

(a) 10 bis 51 Gew.-% 4-Hydroxy-n-butylacrylat oder 4-Hydroxy-n-butylmethacrylat oder eine Mischung aus 4-Hydroxy-n-butylacrylat und 4-Hydroxy-n-butylmethacrylat,

(b) 0 bis 36 Gew.-% eines von (a) verschiedenen hydroxylgruppenhaltigen Esters der Acrylsäure oder eines hydroxylgruppenhaltigen Esters der Methacrylsäure oder eines Gemisches aus solchen Monomeren,

(c) 28 bis 85 Gew.-% eines von (a) und (b) verschiedenen aliphatischen oder cycloaliphatischen Esters der Methacrylsäure mit mindestens 4 C-Atomen im Alkoholrest oder eines Gemisches aus solchen Monomeren,

(d) 0 bis 3 Gew.-% einer ethylenisch ungesättigten Carbonsäure oder einer Mischung aus ethylenisch ungesättigten Carbonsäuren und

(e) 0 bis 20 GGw.-% eines von (a), (b), (c) und (d) verschiedenen ethylenisch ungesättigten Monomeren oder eines Gemisches aus solchen Monomeren

zu einem Polyacrylatharz mit einer Hydroxylzahl von 60 bis 200, einer Säurezahl von 0 bis 35 und einem zahlenmittleren Molekulargewicht von 1500 bis 10000 polymerisiert werden, wobei die Summe der Gewichtsanteile der Komponenten (a), (b), (c), (d) und (e) stets 100 Gew.-% ergibt und die Zusammensetzung der Komponente (c) so ausgewählt wird, daß bei alleiniger Polymerisation der Komponente (c) ein Polymethacrylatarz mit einer Glasübergangstemperatur von +10 bis +100°C erhalten wird.

Die nach dem erfindungsgemäßen Verfahren hergestellten Zweischichtlackierungen zeichnen sich durch hohe Härte, hohen Glanz, gute Haftung zwischen Basislackschicht und Decklackschicht, guten Decklackstand, gute Kratzbeständigkeit und gute Beständigkeit gegen klimatische Einflüsse, organische Lösemittel und Säuren sowie hohe Resistenz gegenüber Vergilbung (insbesondere gegen Vergilbung, die infolge von hohen Einbrenntemperaturen und/oder infolge von langen Einbrennzeiten auftritt) aus. Diese guten Eigenschaften werden auch bei Verwendung unterschiedlicher Basislacke erhalten.

In Stufe (1) des erfindungsgemäßen Verfahrens können im Prinzip alle zur Herstellung von zweischichtigen Lackierungen geeigneten pigmentierten Basislacke eingesetzt werden. Derartige Basislacke sind dem Fachmann gut bekannt. Es können sowohl wasserverdünnbare Basislacke als auch Basislacke auf Basis von organischen Lösemitteln eingesetzt werden. Geeignete Basislacke werden beispielsweise beschrieben in der US-A-3,639,147, DE-A-33 33 072, DE-A-38 14 853, GB-A-2 012 191, US-A-3,953,644, EP-A-260 447, DE-A-39 03 804, EP-A-320 552, DE-A-36 28 124, US-A-4,719,132, EP-A-297 576, EP-A-69 936, EP-A-89 497, EP-A-195 931, EP-A-228 003, EP-A-38 127 und DE-A-28 18 100. In diesen Patentdokumenten sind auch weitere Informationen über das in Rede stehende basecoat/clear-coat-Verfahren zu finden.

In Stufe (2) des erfindungsgemäßen Verfahrens wird der in Stufe (1) aufgebrachte Basislackfilm getrocknet, d.h. dem Basislackfilm wird in einer Abdunstphase wenigstens ein Teil der organischen Lösemittel bzw. des Wassers entzogen. Der Basislackfilm wird in der Regel bei Temperaturen von Raumtemperatur bis 80°C getrocknet.

Die erfindungsgemäß eingesetzten nichtwäßrigen, transparenten Decklacke enthalten ein hydroxylgruppenhaltiges Polyacrylatharz, das erhältlich ist, indem

(a) 10 bis 51, vorzugsweise 25 bis 41 Gew.-% 4-Hydroxy-n-butylacrylat oder 4-Hydroxy-n-butylmethacrylat oder eine Mischung aus 4-Hydroxy-n-butylacrylat und 4-Hydroxy-n-butylmethacrylat,

(b) 0 bis 36 Gew.-%, vorzugsweise 0 bis 20 Gew.-% eines von (a) verschiedenen hydroxylgruppenhaltigen Esters der Acrylsäure oder eines hydroxylgruppenhaltigen Esters der Methacrylsäure oder eines Gemisches aus solchen Monomeren,

(c) 28 bis 85 Gew.-%, vorzugsweise 40 bis 70 Gew.-% eines von (a) und (b) verschiedenen aliphatischen oder cycloaliphatischen Esters der Methacrylsäure mit mindestens 4 C-Atomen im Alkoholrest oder eines Gemisches aus solchen Monomeren,

(d) 0 bis 3, vorzugsweise 0 bis 2 Gew.-% einer ethylenisch ungesättigten Carbonsäure oder einer Mischung aus ethylenisch ungesättigten Carbonsäuren und

(e) 0 bis 20, vorzugsweise 5 bis 15 Gew.-% eines von (a), (b), (c) und (d) verschiedenen ethylenisch ungesättigten Monomeren oder eines Gemisches aus solchen Monomeren

zu einem Polyacrylatharz mit einer Hydroxylzahl von 60 bis 200, vorzugsweise 100 bis 160, einer Säurezahl von 0 bis 35, vorzugsweise 0 bis 25 und einem zahlenmittleren Molekulargewicht von 1500 bis 10000, vorzugsweise 2500 bis 5000, polymerisiert werden, wobei die Summe der Gewichtsanteile der Komponenten (a), (b), (c), (d) und (e) stets 100 Gew.-% ergibt und die Zusammensetzung der Komponente (c) so gewählt wird, daß bei alleiniger Polymerisation der Komponente (c) ein Polymethacrylatharz mit einer Glasübergangstemperatur von +10 bis +100, vorzugsweise +20 bis +60°C erhalten wird.

Die Herstellung der erfindungsgemäß eingesetzten Polyacrylatharze kann nach allgemein gut bekannten Polymerisationsverfahren erfolgen. Polymerisationsverfahren zur Herstellung von Polyacrylatharzen sind allgemein bekannt und vielfach beschrieben (vgl. z.B.: Houben-Weyl, Methoden der organischen Chemie, 4. Auflage, Band 14/1, Seite 24 bis 255 (1961)).

Die erfindungsgemäß eingesetzten Polyacrylatharze werden vorzugsweise mit Hilfe des Lösungspolymerisationsverfahrens hergestellt. Hierbei wird üblicherweise ein organisches Lösemittel bzw. Lösemittelgemisch vorgelegt und zum Sieden erhitzt. In dieses organische Lösemittel bzw. Lösemittelgemisch werden dann das zu polymerisierende Monomerengemisch sowie ein oder mehrere Polymerisationsinitiatoren kontinuierlich zugegeben. Die Polymerisation erfolgt bei Temperaturen zwischen 100 und 160°C, vorzugsweise zwischen 130 und 150°C. Als Polymerisationsinitiatoren werden vorzugsweise freie Radikale bildende Initiatoren eingesetzt. Initiatorart und -menge werden üblicherweise so gewählt, daß bei der Polymerisationstemperatur während der Zulaufphase ein möglichst konstantes Radikalangebot vorliegt.

Als Beispiele für einsetzbare Initiatoren werden genannt: Dialkylperoxide, wie Di-tert.-Butylperoxid, Dicumylperoxid; Hydroperoxide, wie Cumolhydroperoxid, tert.-Butylhydroperoxid; Perester, wie tert.-Butylperbenzoat, tert.-Butylperpivalat, tert.-Butylper-3,5,5-trimethylhexanoat, tert.-Butylper-2-ethylhexanoat.

Die Polymerisationsbedingungen (Reaktionstemperatur, Zulaufzeit der Monomerenmischung, Menge und Art der organischen Lösemittel und Polymerisationsinitiatoren, eventuelle Mitverwendung von Molekulargewichtsreglern, wie z.B. Mercaptanen, Thiolglykolsäureestern und Chlorwasserstoffen) werden so ausgewählt, daß die erfindungsgemäß eingesetzten Polyacrylatharze ein zahlenmittleres Molekulargewicht von 1500 bis 10.000, vorzugsweise 2500 bis 5000 (bestimmt durch Gelpermeationschromatographie unter Verwendung von Polystyrol als Eichsubstanz) aufweisen.

Die Säurezahl der erfindungsgemäß eingesetzten Polyacrylatharze kann vom Fachmann durch Einsatz entsprechender Mengen der Komponente (d) eingestellt werden. Analoges gilt für die Einstellung der Hydroxylzahl. Sie ist über die Menge an eingesetzter Komponente (a) und (b) steuerbar.

Als Komponente (a) wird 4-Hydroxy-n-butylacrylat, 4-Hydroxy-n-butylmethacrylat oder eine Mischung aus 4-Hydroxy-n-butylacrylat und 4-Hydroxy-n-butylmethacrylat eingesetzt. Als Komponente (a) wird vorzugsweise 4-Hydroxy-n-butylacrylat eingesetzt.

Als Komponente (b) kann - unter der Bedingung, daß bei alleiniger Polymerisation der Komponente (b) ein Polyacrylatharz mit einer Glasübergangstemperatur von 0 bis +80, vorzugsweise +20 bis +60°C erhalten wird - im Prinzip jeder von (a) verschiedene hydroxylgruppenhaltige Ester der Acrylsäure oder Methacrylsäure oder ein Gemisch aus solchen Monomeren eingesetzt werden. Als Beispiele werden genannt: Hydroxyalkylester der Acrylsäure, wie z.B. Hydroxyethylacrylat und Hydroxypropylacrylat und Hydroxyalkylester der Methacrylsäure, wie z.B. Hydroxyethylmethacrylat und Hydroxypropylmethacrylat.

Die Glasübergangstemperatur kann vom Fachmann unter Zuhilfenahme der Formel

$$\frac{1}{T_G} = \sum_{n=1}^{n=x} \frac{W_n}{T_{Gn}}$$

$T_G$ = Glasübergangstemperatur des Polymeren
x = Anzahl der verschiedenen einpolymerisierten Monomere,
$W_n$ = Gewichtsanteil des n-ten Monomers
$T_{Gn}$ = Glasübergangstemperatur des Homopolymers aus dem n-ten Monomer

näherungsweise berechnet werden.

Als Komponente (c) kann im Prinzip jeder von (a) und (b) verschiedene aliphatische oder cycloaliphatische Ester der Methacrylsäure mit mindestens 4 C-Atomen im Alkoholrest oder ein Gemisch aus solchen Monomeren eingesetzt werden. Als Beispiele werden genannt: aliphatische Ester der Methacrylsäure mit 4 bis 20 C-Atomen im Alkoholrest, wie z.B. n-Butyl-, iso-Butyl-, tert.-Butyl, 2-Ethylhexyl-, Stearyl- und Laurylmethacrylat und cycloaliphatische Ester der Methacrylsäure wie z. B. Cyclohexylmethacrylat. Die Zusammensetzung der Komponente (c) wird so ausgewählt, daß bei alleiniger Polymerisation der Komponente (c) ein Polymethacrylatharz mit einer Glasübergangstemperatur von +10 bis +100°C, vorzugsweise +20 bis +60°C erhalten wird.

Als Komponente (d) kann im Prinzip jede ethylenisch ungesättigte Carbonsäure oder eine Mischung aus ethylenisch ungesättigten Carbonsäuren eingesetzt werden. Als Komponente (d) werden vorzugsweise Acrylsäure und/oder Methacrylsäure eingesetzt.

Als Komponente (e) kann im Prinzip jedes von (a), (b), (c) und (d) verschiedene ethylenisch ungesättigte Monomer oder ein Gemisch aus solchen Monomeren eingesetzt werden. Als Beispiele für Monomere, die als Komponente (e) eingesetzt werden können, werden genannt: vinylaromatische Kohlenwasserstoffe, wie Styrol, α-Alkylstyrol und Vinyltoluol, Amide der Acrylsäure und Methacrylsäure, wie z.B. Methacrylamid und Acrylamid; Nitrile der Methacrylsäure und Acrylsäure; Vinylether und Vinylester. Als Komponente (e) werden vorzugsweise vinylaromatische Kohlenwasserstoffe, insbesondere Styrol eingesetzt.

Die Zusammensetzung der Komponente (e) wird vorzugsweise so ausgewählt, daß bei alleiniger Polymerisation der Komponente (e) ein Polymer mit einer Glasübergangstemperatur von +70 bis +120, vorzugsweise +80 bis +100°C erhalten wird.

Als Komponente (B) werden Mischungen aus Aminoplastharzen und blockierten bzw. unblockierten Polyisocyanaten eingesetzt.

Aminoplastharze sind dem Fachmann gut bekannt und werden von vielen Firmen als Verkaufsprodukte angeboten. Es handelt sich um Kondensationsprodukte aus Aldehyden, insbesondere Formaldehyd und beispielsweise Harnstoff, Melamin, Guanamin und Benzoguanamin. Die Aminoplastharze enthalten Alkohol-, vorzugsweise Methylolgruppen, die in der Regel teilweise oder bevorzugt vollständig mit Alkoholen verethert sind. Es werden insbesondere mit niedrigen Alkoholen, insbesondere mit Methanol oder Butanol veretherte Melamin-Formaldehydharze eingesetzt. Ganz besonders bevorzugt werden mit niedrigen Alkoholen, insbesondere mit Methanol und/oder Ethanol und/oder Butanol veretherte Melamin-Formaldehydharze, die im statistischen Mittal pro Triazinring noch 0,1 bis 0,25 an Stickstoffatome gebundene Wasserstoffatome enthalten, in Komponente (B) eingesetzt.

In Komponente (B) kann im Prinzip jedes auf dem Lackgebiet einsetzbare Polyisocyanat bzw. eine Mischung aus solchen Polyisocyanaten eingesetzt werden. Es ist jedoch bevorzugt, Polyisocyanate einzusetzen, deren Isocyanatgruppen an aliphatische oder cycloaliphatische Reste gebunden sind. Beispiele für derartige Polyisocyanate sind Hexamethylendiisocyanat, Isophorondiisocyanat, Trimethylhexamethylendiisocyanat, Dicyclohexylmethandiisocyanat und 1,3-bis-(2-Isocyanatopropyl-2-)benzol (TMXDI) sowie Addukte dieser Polyisocyanate an Polyole, insbesondere niedermolekulare Polyole, wie z.B. Trimethylolpropän und von diesen Polyisocyanaten abgeleitete isocyanuratgruppenund/oder biuretgruppenhaltige Polyisocyanate. Als Polyisocyanate werden besonders bevorzugt Hexamethylendiisocyanat und Isophorondiisocyanat, von diesen Diisocyanaten abgeleitete isocyanurat- und/oder biuretgruppenhaltige Polyisocyanate, die vorzugsweise mehr als 2 Isocyanatgruppen im Molekül enthalten sowie Umsetzungsprodukte aus Hexamethylendiisocyanat und Isophorondiisocyanat oder einer Mischung aus Hexamethylendiisocyanat und Isophorondiisocyanat mit 0,3 bis 0,5 Äquivalenten eines niedermolekularen Polyols mit einem Molekulargewicht von 62 bis 500, vorzugsweise von 104 bis 204, insbesondere eines Triols, wie z.B. Trimethylolpropan, eingesetzt.

Polyisocyanate können sowohl in freier als auch in blockierter Form in Vernetzungsmittel (B) eingesetzt werden.

Zur Blockierung der Polyisocyanate kann im Prinzip jedes für die Blockierung von Polyisocyanaten einsetzbare Blockierungsmittel mit einer ausreichend tiefen Deblockierungstemperatur eingesetzt werden. Derartige Blockierungsmittel sind dem Fachmann gut bekannt und brauchen hier nicht näher erläutert zu werden. Es ist bevorzugt, blockierte Polyisocyanate einzusetzen, die sowohl mit einem Blockierungsmittel (I) als auch mit einem Blockierungsmittel (II) blockierte Isocyanatgruppen enthalten, wobei

- das Blockierungsmittel (I) ein Dialkylmalonat oder eine Mischung aus Dialkylmalonaten ist

- das Blockierungsmittel (II) ein von (I) verschiedenes CH-acides Blockierungsmittel, ein Oxim oder eine Mischung aus diesen Blockierungsmitteln ist und

- das Äquivalentverhältnis zwischen den mit (I) blockierten Isocyanatgruppen und den mit (II) blockierten Isocyanatgruppen zwichen 1,0 : 1,0 und 9,0 : 1,0, vorzugsweise zwischen 8,0 : 2,0 und 6,0 : 4,0, besonders bevorzugt zwischen 7,5 : 2,5 und 6,5 : 3,5 liegt.

Die bevorzugt eingesetzten blockierten Polyisocyanate können wie folgt hergestellt werden. Ein Polyisocyanat oder eine Mischung aus Polyisocyanaten wird in an sich bekannter Art und Weise mit einer Mischung aus den Blockierungsmitteln (I) und (II) umgesetzt, wobei die Mischung aus den Blockierungsmitteln (I) und (II) die Blockierungsmittel (I) und (II) in einem Molverhältnis enthält, das zwischen 1,0 : 1,0 und 9,0 : 1,0, vorzugsweise zwischen 8,0 : 2,0 und 6,0 : 4,0, besonders bevorzugt zwischen 7,5 : 2,5 und 6,5 : 3,5 liegt. Das Polyisocyanat bzw. die Mischung aus Polyisocyanaten kann mit der Mischung aus den Blockierungsmitteln (I) und (II) so weit umgesetzt werden, bis keine Isocyanatgruppen mehr nachweisbar sind. In der Praxis kann das den Einsatz von sehr großen Überschüssen an Blockierungsmittel und/oder sehr lange Reaktionszeiten erfordern. Es wurde nun überraschenderweise gefunden, daß auch dann Lacke mit den oben beschriebenen guten Eigenschaften erhalten werden, wenn mindestens 50, vorzugsweise mindestens 70 Prozent der Isocyanatgruppend des Polyisocyanates bzw. des Gemisches aus Polyisocyanaten mit der Mischung aus den Blockierungsmitteln (I) und (II) umgesetzt werden und die verbleibenden Isocyanatgruppen mit einer hydroxylgruppenhaltigen Verbindung oder einer Mischung aus hydroxylgruppenhaltigen Verbindungen umgesetzt werden. Als hydroxylgruppenhaltige Verbindungen werden vorzugsweise niedermolekulare aliphatische oder cycloaliphatische Polyole, wie Neopentylglykol, Dimethylolcyclohexan, Ethylenglykol, Diethylenglykol, Propylenglykol, 2-Methyl-2-propylpropandiol 1,3, 2-Ethyl-2-butylpropandiol 1,3, 2,2,4 Trimethylpentandiol 1,5 und 2,2,5 Trimethylhexandiol-1,6 oder die als Komponente (A) einsetzbaren hydroxylgruppenhaltigen Polyacrylatharze eingesetzt.

Die bevorzugt eingesetzten blockierten Polyisocyanate sind auch erhältlich, indem mit dem Blockierungsmitteln (I) bzw. (II) blockierte Polyisocyanate in einem solchen Verhältnis gemischt werden, daß eine Mischung erhalten wird, in der das Äquivalentverhältnis zwischen den mit (I) blockierten Isocyanatgruppen und den mit (II) blockierten Isocyanatgruppen zwischen 1,0 : 1,0 und 9,0 : 1,0, vorzugsweise zwischen 8,0 : 2,0 und 6,0 : 4,0, besonders bevorzugt zwischen 7,5 : 2,5 und 6,5 : 3,5 liegt.

Als Blockierungsmittel (I) werden Dialkylmalonate oder eine Mischung aus Dialkylmalonaten eingesetzt.

Als Beispiele für einsetzbare Dialkylmalonate werden Dialkylmalonate mit je 1 bis 6 Kohlenstoffatomen in den Alkylresten genannt, wie z.B. Malonsäuredimethylester und Malonsäurediethylester, wobei Malonsäurediethylester bevorzugt eingesetzt wird.

Als Blockierungsmittel (II) werden von (I) verschiedene aktive Methylengruppen enthaltende Blockierungsmittel und Oxime sowie Mischungen aus diesen Blockierungsmitteln eingesetzt.

Als Beispiele für Blockierungsmittel, die als Blockierungsmittel (II) einsetzbar sind, werden genannt: Acetessigsäuremethyl-, ethyl-, -propyl-, butyl-, -pentyl-, hexyl-, heptyl-, octyl-, nonyl-, -decyl oder -dodecylester, Acetonoxim, Methylethylketoxim, Acetylaceton, Formaldoxim, Acetaldoxim, Benzophenoxim, Acetoxim und Diisobutylketoxim. Als Blockierungsmittel (II) wird vorzugsweise ein Acetessigsäurealkylester mit 1 bis 6 Kohlenstoffatomen im Alkylrest oder eine Mischung aus solchen Acetessigsäurealkylestern oder ein Ketoxim bzw. eine Mischung aus Ketoximen eingesetzt. Besonders bevorzugt werden Acetessigsäurealkylester oder Methylethylketoxim als Blockierungsmittel (II) eingesetzt.

Die Komponenten (A) und (B) werden in den erfindungsgemäß eingesetzten transparenten Decklakken im allgemeinen in solchen Mengen eingesetzt, daß die Komponente (A) in einer Menge von 50 bis 90, vorzugsweise 60 bis 75 Gew.-% und die Komponente (B) in einer Menge von 10 bis 50, vorzugsweise 25 bis 40 Gew.-% vorhanden ist, wobei die Gewichtsprozentangaben auf (A) + (B) = 100 Gew.-% bezogen sind.

Die erfindungsgemäß eingesetzten transparenten Decklacke enthalten keine bzw. nur transparente Pigmente. Als organische Lösemittel enthalten die Decklacke übliche zur Herstellung von Lacken gebräuchliche organische Lösemittel. Die Decklacke können außerdem noch weitere gebräuchliche Zusätze, wie z.B. Lichtschutzmittel, Verlaufshilfsmittel usw. enthalten.

Die mit den erfindungsgemäß eingesetzten Decklacken hergestellten Zweischichtlackierungen weisen die vorteilhaften Eigenschaften insbesondere auch dann auf, wenn sie unter den zur Zeit bei der Automobilserienlackierung angewandten Einbrennbedingungen (30 Minuten bei 130°C oder 20 Minuten bei 140°C) eingebrannt worden sind.

Unter Verwendung der oben beschriebenen Komponenten (A) und (B) können auch pigmentierte nichtwäßrige Lacke hergestellt werden, die nicht transparent sind. Um dies zu erreichen, können im Prinzip alle zur Herstellung von pigmentierten nichtwäßrigen Lacken geeigneten organischen oder anorganischen Pigmente bzw. Mischungen aus solchen Pigmenten eingesetzt werden. Als Beispiele für einsetzbare Pigmente werden genannt: Azopigmente (z.B. Pigment Red 57:1, Pigment Yellow 1, Pigment Yellow 13 und Pigment Red 7), Phtalocyaninpigmente (z. B. Pigment Blue 15:3 und Phtalocyaningrün), Carbonylpigmente (z. B. Pigment Red 88, Pigment Red 177, Pigment Yellow 123, Pigment Violett 19, Pigment Yellow 24 und Pigment Orange 51 bzw. 52), Dioxazinpigmente (z.B. Pigment Violet 23), Titandioxid, Farbruß, Eisenoxidschwarz (Magnetit, Trieisentetroxid), Eisenoxidrot (Hämatit, Á-Dieisentrioxid), Eisenoxidgelb (Eisenoxidhydroxid), Eisenoxidbraun (Mischpigment aus Eisenoxidrot, Eisenoxidgelb und Eisenoxidschwarz), Chromoxidgrün (Dichromtrioxid), Nickeltitangelb, Chromtitangelb und Kobaltblau. Desweiteren können auch Effektpigmente wie z.B. Metallplättchenpigmente, insbesondere Aluminiumplättchenpigmente und Perlglanzpigmente eingesetzt werden.

Bei der Herstellung von pigmentierten nichtwäßrigen Lacken, die nicht transparent sind, werden die Komponenten (A) und (B) und das Pigment bzw. die Mischung aus Pigmenten im allgemeinen in solchen Mengen eingesetzt, daß die Komponente (A) in einer Menge von 50 bis 90, vorzugsweise 60 bis 75 Gew.-%, die Komponente (B) in einer Menge von 9 bis 50, vorzugsweise 20 bis 40 Gew.-% und das Pigment bzw. die Mischung aus Pigmenten in einer Menge von 1 bis 40, vorzugsweise 5 bis 15 Gew.% vorhanden ist, wobei die Gewichtsprozentangaben auf (A) + (B) + Pigment bzw. Mischung aus Pigmenten = 100 Gew.-% bezogen sind.

Auch mit den pigmentierten nichtwäßrigen Lacken, die nicht transparent sind, können Lackierungen, insbesondere einschichtige Lackierungen, mit sehr guten Eigenschaften hergestellt werden.

Die Erfindung wird in den folgenden Beispielen näher erläutert. Alle Mengen- und Prozentangaben sind, wenn nicht ausdrücklich etwas anderes festgestellt wird, als Gewichtsangaben zu verstehen.

<u>(I) Herstellung erfindungsgemäßer Polyacrylatharze</u>

**Polyacrylatharzlösung (1)**

In einem Stahlkessel ausgestattet mit Monomerzulauf, Initiatorzulauf, Thermometer, Ölheizung und Rückflußkühler werden 879 Teile eines handelsüblichen aromatischen Lösemittelgemisches (Solvesso$^R$, Hersteller: Esso) mit einem Siedebereich von 158°C bis 172°C vorgelegt und auf 140°C aufgeheizt. Dann wird eine Mischung α aus 87 Teilen des aromatischen Lösemittelgemisches und 87 Teilen t-Butylperoctoat in einer solchen Geschwindigkeit unter Rühren zugegeben, daß die Zugabe der Mischung α nach 4,75 h abgeschlossen ist. 15 min nach Beginn der Zugabe der Mischung α wird eine Mischung β bestehend aus 819 Teilen n-Butylmethacrylat, 145 Teilen i-Butylmethacrylat, und 483 Teilen Butandiol-1,4-monoacrylat in einer solchen Geschwindigkeit zu der Reaktionsmischung gegeben, daß die Zugabe der Mischung β nach 4 h abgeschlossen ist. Nach Abschluß der Zugabe der Mischung α wird das Reaktionsgemisch noch 2 h auf 140°C gehalten und anschließend auf Raumtemperatur abgekühlt.

Die erhaltene Acrylatharzlösung weist einen Feststoffgehalt von 60% (1 h, 130°C; Umluftofen), eine Viskosität von 4,5 dPas (ICI-Platte/Kegel-Viskosimeter, 23°C) und eine Säurezahl von 1,2 (bezogen auf den Feststoffgehalt) auf.

**Polyacrylatharzlösung (2)**

In einem Stahlkessel ausgestattet mit Monomerzulauf, Initiatorzulauf, Thermometer, Ölheizung und Rückflußkühler werden 879 Teile eines handelsüblichen aromatischen Lösemittels mit einem Siedebereich von 158°C bis 172°C (Solvesso[R]) vorgelegt und auf 140°C aufgeheizt. Dann wird eine Mischung α aus 87 Teilen des aromatischen Lösemittelgemisches und 87 Teilen t-Butylperoctoat in einer solchen Geschwindigkeit unter Rühren zugegeben, daß die Zugabe der Mischung α nach 4,75 h abgeschlossen ist. 15 min nach Beginn der Zugabe der Mischung α wird eine Mischung β bestehend aus 290 Teilen Cyclohexylmethacrylat, 709 Teilen n-Butylmethacrylat, 233 Teilen Butandiol-1,4-monoacrylat, 200 Teilen Hydroxypropylmethacrylat und 15 Teilen Acrylsäure in einer solchen Geschwindigkeit zu der Reaktionsmischung gegeben, daß die Zugabe der Mischung β nach 4 h abgeschlossen ist. Nach Abschluß der Zugabe der Mischung α wird das Reaktionsgemisch noch 2 h auf 140°C gehalten und anschließend auf Raumtemperatur abgekühlt.

Die erhaltene Acrylatharzlösung weist einen Feststoffgehalt von 60% (1 h, 130°C; Umluftofen), eine Viskosität von 7,0 dPas (ICI-Platte/Kegel-Viskosimeter, 23°C) und eine Säurezahl von 9,0 (bezogen auf den Feststoffgehalt) auf.

(II) Herstellung von Vernetzungsmitteln

**Lösung eines blockierten Polyisocyanats**

In einen Stahlkessel ausgestattet mit Zulaufgefäß, Thermometer, Ölheizung und Rückflußkühler werden 504 Teile eines handelsüblichen Isocyanurattrimeren des Hexamethylendiisocyanats und 257,2 Teile eines handelsüblichen aromatischen Lösemittelgemisches (Solvesso[R]) eingewogen. Die Lösung wird auf 50°C erwärmt. Dann wird eine Mischung aus 348 Teilen Diethylmalonat, 104 Teilen Acetessigsäureethylester und 2,5 Teilen einer 50%-igen Lösung von Natrium-p-dodecylphenolat in Xylol in einem Zeitraum von 2 Stunden so zudosiert, daß die Temperatur 70°C nicht überschreitet. Es wird dann langsam auf 90°C erhitzt und diese Temperatur für 5 Stunden gehalten. Dann werden weitere 2,5 Teile Natrium-p-dodecylphenolatlösung zugegeben und es wird so lange bei 90°C gehalten, bis der Gehalt an NCO-Gruppen im Reaktionsgemisch 0,48% erreicht hat. Dann werden 35,1 Teile n-Butanol zugegeben. Die erhaltene Lösung hat einen nichtflüchtigen Anteil von 59,6% (60 min., 130°C) und eine Viskosität von 590 mPas, gemessen in einem ICI-Platte-Kegel-Viskosimeter bei 23°C.

**Lösung eines unblockierten Polyisocyanats**

88,8 Teile einer handelsüblichen 90%-igen Lösung des Isocyanurattrimeren des Hexamethylendiisocyanats werden mit 5,6 Teilen Butylacetat und 5,6 Teilen eines handelsüblichen aromatischen Lösemittelgemisches (Solvesso[R]) gut vermischt.

(III) Herstellung von erfindungsgemäßen transparenten Decklacken

**Decklack (1)**

72,7 Teile der Polyacrylatharzlösung (1), 6,8 Teile der Lösung des blockierten Polyisocyanats und 14,1 Teile eines handelsüblichen iminogruppenhaltigen, mit n-Butanol veretherten Melaminharzes (80 %-ig in Butanol; Cymel[R] 1158; Cyanamid) werden durch Rühren mit einem Laborturbinenrührer gut vermischt. Zu dieser Mischung werden 4,7 Teile Butylglykol, 4,0 Teile Butanol und 2,0 Teile einer handelsüblichen 5 %-igen Lösung eines Verlaufshilfsmittels auf Basis eines Polysiloxans zugegeben und gut eingerührt. Dann werden 1,1 Teile eines handelsüblichen UV-Absorbers (substituiertes Benztriazol) und 1,1 Teile eines handelsüblichen Radikalfängers (1,4,6-substituiertes Benztriazol) zusammen mit 3,0 Teilen Xylol so lange gerührt, bis sie vollständig gelöst sind. Die so erhaltene Lösung wird dann zu den bereits vorgemischten Lackkomponenten zugegeben und gut untergemischt. Der auf diese Weise erhaltene transparente Decklack wird mit Xylol auf eine Viskosität von 23 sec, gemessen im DIN-4 Becher bei 20°C, eingestellt.

IV Herstellung von zweischichtigen Decklackierungen

Auf mit einem handelsüblichen Elektrotauchlack und einem handelsüblichen Füller lackierte Stahlbleche wird ein handelsüblicher, nichtwäßriger aluminiumpigmenthaltiger Basislack aufgespritzt, **5** Minuten bei Raumtemperatur getrocknet und dann mit den transparenten Decklacken überlackiert (Trockenfilmdicke 40 - 45 μm). Nach einer weiteren Trockenzeit von 5 Minuten bei Raumtemperatur werden die Basislack- und Decklackschichten 20 Minuten lang bei 140°C im Umluftofen zusammen eingebrannt. Die so erhaltenen Lackierungen zeichnen sich durch hohe Härte, hohen Glanz, gute Haftung zwischen Basislackschicht und Decklackschicht und guten Decklackstand aus. Ein besonderer Vorteil der Lackierungen besteht darin, daß sie sowohl eine sehr gute Kratzfestigkeit als auch eine sehr gute Säurebeständigkeit aufweisen.

**Patentansprüche**

1. Verfahren zur Herstellung einer zweischichtigen Decklackierung auf einer Substratoberfläche, bei dem

(1) ein pigmentierter Basislack auf die Substratoberfläche aufgebracht wird,

(2) der in Stufe (1) aufgebrachte Basislackfilm getrocknet wird,

(3) auf den in Stufe (2) getrockneten Basislackfilm ein nichtwäßriger, transparenter Decklack, der

(A) ein hydroxylgruppenhaltiges Polyacrylatharz und

(B) ein Vernetzungsmittel

enthält, aufgebracht und anschließend

(4) Basislackschicht und Decklackschicht zusammen eingebrannt werden,
**dadurch gekennzeichnet, daß** in Stufe (3) ein nichtwäßriger, transparenter Decklack aufgebracht wird, der als Komponente (A) ein hydroxylgruppenhaltiges Polyacrylatharz und als Komponente (B) eine Mischung aus Aminoplastharzen und Polyisocyanaten enthält, wobei das hydroxylgruppenhaltige Polyacrylatharz erhältlich ist, indem

(a) 10 bis 51 Gew.-% 4-Hydroxy-n-butylacrylat oder 4-Hydroxy-n-butylmethacrylat oder eine Mischung aus 4-Hydroxy-n-butylacrylat und 4-Hydroxy-n-butylmethacrylat,

(b) 0 bis 36 Gew.-% eines von (a) verschiedenen hydroxylgruppenhaltigen Esters der Acrylsäure oder eines hydroxylgruppenhaltigen Esters der Methacrylsäure oder eines Gemisches aus solchen Monomeren,

(c) 28 bis 85 Gew.-% eines von (a) und (b) verschiedenen aliphatischen oder cycloaliphatischen Esters der Methacrylsäure mit mindestens 4 C-Atomen im Alkoholrest oder eines Gemisches aus solchen Monomeren,

(d) 0 bis 3 Gew.-% einer ethylenisch ungesättigten Carbonsäure oder einer Mischung aus ethylenisch ungesättigten Carbonsäuren und

(e) 0 bis 20 Gew.-% eines von (a), (b), (c) und (d) verschiedenen ethylenisch ungesättigten Monomeren oder eines Gemisches aus solchen Monomeren

zu einem Polyacrylatharz mit einer Hydroxylzahl von 60 bis 200, einer Säurezahl von 0 bis 35 und einem zahlenmittleren Molekulargewicht von 1500 bis 10000 polymerisiert werden, wobei die Summe der Gewichtsanteile der Komponenten (a), (b), (c), (d) und (e) stets 100 Gew.-% ergibt und die Zusammensetzung der Komponente (c) so ausgewählt wird, daß bei alleiniger Polymerisation der Komponente (c) ein Polymethacrylatharz mit einer Glasübergangstemperatur von +10 bis +100°C erhalten wird.

2. Nichtwäßrige Lacke, enthaltend

(A) ein hydroxylgruppenhaltiges Polyacrylatharz und

(B) ein Vernetzungsmittel

**dadurch gekennzeichnet, daß** die Komponente (A) ein hydroxylgruppenhaltiges Polyacrylatharz und die Komponente (B) eine Mischung aus Aminoplastharzen und Polyisocyanaten ist, wobei das hydroxylgruppenhaltige Polyacrylatharz erhältlich ist, indem

(a) 10 bis 51 Gew.-% 4-Hydroxy-n-butylacrylat oder 4-Hydroxy-n-butylmethacrylat oder eine Mischung aus 4-Hydroxy-n-butylacrylat und 4-Hydroxy-n-butylmethacrylat,

(b) 0 bis 36 Gew.-% eines von (a) verschiedenen hydroxylgruppenhaltigen Esters der Acrylsäure oder eines hydroxylgruppenhaltigen Esters der Methacrylsäure oder eines Gemisches aus solchen Monomeren,

(c) 28 bis 85 Gew.-% eines von (a) und (b) verschiedenen aliphatischen oder cycloaliphatischen Esters der Methacrylsäure mit mindestens 4 C-Atomen im Alkoholrest oder eines Gemisches aus solchen Monomeren,

(d) 0 bis 3 Gew.-% einer ethylenisch ungesättigten Carbonsäure oder einer Mischung aus ethylenisch ungesättigten Carbonsäuren und

(e) 0 bis 20 Gew.-% eines von (a), (b), (c) und (d) verschiedenen ethylenisch ungesättigten Monomeren oder eines Gemisches aus solchen Monomeren

zu einem Polyacrylatharz mit einer Hydroxylzahl von 60 bis 200, einer Säurezahl von 0 bis 35 und einem zahlenmittleren Molekulargewicht von 1.500 bis 10.000 polymerisiert werden, wobei die Summe der Gewichtsanteile der Komponenten (a), (b), (c), (d) und (e) stets 100 Gew.-% ergibt und die Zusammensetzung der Komponente (c) so ausgewählt wird, daß bei alleiniger Polymerisation der Komponente (c) ein Polymethacrylatharz mit einer Glasübergangstemperatur von +10 bis +100°C erhalten wird.

3. Verfahren oder Lacke nach Anspruch 1 oder 2, **dadurch gekennzeichnet, daß** die Komponente (e) so ausgewählt wird, daß bei alleiniger Polymerisation der Komponente (e) ein Polymer mit einer Glasübergangstemperatur von +70 bis +120°C erhalten wird.

4. Verfahren oder Lacke nach einem der Ansprüche 1 bis 3, **dadurch gekennzeichnet, daß** das hydroxylgruppenhaltige Polyacrylatharz erhältlich ist, indem 25 bis 41 Gew.-% der Komponente (a), 0 bis 20 Gew.% der Komponente (b), 40 bis 70 Gew.-% der Komponente (c), 0 bis 2 Gew.-% der Komponente (d) und 5 bis 15 Gew.-% der Komponente (e) zu einem Polyacrylatharz mit einer Hydroxylzahl von 100 bis 160, einer Säurezahl von 0 bis 25 und einem zahlenmittleren Molekulargewicht von 2500 bis 5000 polymerisiert werden, wobei die Zusammensetzung der Komponente (c) so gewählt wird, daß bei alleiniger Polymerisation der Komponente (c) ein Polymethacrylatharz mit einer Glasübergangstemperatur von +20 bis +60°C und die Komponente (e) so ausgewählt wird, daß bei alleiniger Polymerisation der Komponente (e) ein Polymer mit einer Glasübergangstemperatur von +80 bis +100°C erhalten wird.

**Claims**

1. Process for the production of a two-coat finish on a substrate surface, in which

(1) a pigmented basecoat is applied to the substrate surface,

(2) the basecoat film applied in step (1) is dried,

(3) a nonaqueous, transparent topcoat containing

(A) a hydroxyl group-containing polyacrylate resin and

(B) a crosslinking agent
is applied to the basecoat film dried in step (2), and subsequently

(4) basecoat and topcoat are baked together,

**characterized in that** in step (3) a nonaqueous, transparent topcoat is applied which contains a hydroxyl group-containing polyacrylate resin as component (A) and a mixture of aminoplast resins and polyisocyanates as component (B), the hydroxyl group-containing polyacrylate resin being obtainable by polymerizing

(a) from 10 to 51% by weight of 4-hydroxy-n-butyl acrylate or 4-hydroxy-n-butyl methacrylate or a mixture of 4-hydroxy-n-butyl acrylate and 4-hydroxy-n-butyl methacrylate,

(b) from 0 to 36% by weight of a hydroxyl group-containing ester of acrylic acid or of a hydroxyl group-containing ester of methacrylic acid, which is different from (a), or of a mixture of such monomers,

(c) from 28 to 85% by weight of an aliphatic or cycloaliphatic ester of methacrylic acid which is different from (a) and (b) and has at least 4 carbon atoms in the alcohol radical, or of a mixture of such monomers,

(d) from 0 to 3% by weight of an ethylenically unsaturated carboxylic acid or of a mixture of ethylenically unsaturated carboxylic acids, and

(e) from 0 to 20% by weight of an ethylenically unsaturated monomer which is different from (a), (b), (c) and (d), or of a mixture of such monomers, to give a polyacrylate resin having a hydroxyl number of from 60 to 200, an acid number of from 0 to 35 and a number-average molecular weight of from 1500 to 10,000, the sum of the proportions by weight of components (a), (b), (c), (d) and (e) always being 100% by weight and the composition of component (c) being selected such that the polymethacrylate resin resulting from homopolymerization of component (c) has a glass transition temperature of from +10 to +100°C.

2. Nonaqueous coating materials comprising

(A) a hydroxyl group-containing polyacrylate resin and

(B) a crosslinking agent,

**characterized in that** component (A) is a hydroxyl group-containing polyacrylate resin and component (B) is a mixture of aminoplast resins and polyisocyanates, the hydroxyl group-containing polyacrylate resin being obtainable by polymerizing

(a) from 10 to 51% by weight of 4-hydroxy-n-butyl acrylate or 4-hydroxy-n-butyl methacrylate or a mixture of 4-hydroxy-n-butyl acrylate and 4-hydroxy-n-butyl methacrylate,

(b) from 0 to 36% by weight of a hydroxyl group-containing ester of acrylic acid or of a hydroxyl group-containing ester of methacrylic acid, which is different from (a), or of a mixture of such monomers,

(c) from 28 to 85% by weight of an aliphatic or cycloaliphatic ester of methacrylic acid which is different from (a) and (b) and has at least 4 carbon atoms in the alcohol radical, or of a mixture of such monomers,

(d) from 0 to 3% by weight of an ethylenically unsaturated carboxylic acid or of a mixture of ethylenically unsaturated carboxylic acids, and

(e) from 0 to 20% by weight of an ethylenically unsaturated monomer which is different from (a), (b), (c) and (d), or of a mixture of such monomers,

to give a polyacrylate resin having a hydroxyl number of from 60 to 200, an acid number of from 0 to 35 and a number-average molecular weight of from 1500 to 10,000, the sum of the proportions by weight of components (a), (b), (c), (d) and (e) always being 100% by weight and the composition of component (c) being selected such that the polymethacrylate resin resulting from homopolymerization of component (c) has a glass transition temperature of from +10 to +100°C.

**3.** Process or coating materials according to claim 1 or 2, **characterized in that** component (e) is selected such that the polymer resulting from homopolymerization of component (e) has a glass transition temperature of from +70 to +120°C.

**4.** Process or coating materials according to one of claims 1 to 3, **characterized in that** the hydroxyl group-containing polyacrylate resin is obtainable by polymerizing from 25 to 41% by weight of component (a), from 0 to 20% by weight of component (b), from 40 to 70% by weight of component (c), from 0 to 2% by weight of component, (d) and from 5 to 15% by weight of component (e) to give a polyacrylate resin having a hydroxyl number of from 100 to 160, an acid number of from 0 to 25 and a number-average molecular weight of from 2500 to 5000, the composition of component (c) being chosen such that the polymethacrylate resin resulting from homopolymerization of component (c) has a glass transition temperature of from +20 to +60°C and component (e) being selected such that the polymer resulting from homopolymerization of component (e) has a glass transition temperature of from +80 to +100°C.

## Revendications

**1.** Procédé pour la production d'une peinture de finition bicouche à la surface d'un subjectile, dans lequel

(1) on applique une peinture de base pigmentée à la surface du subjectile,
(2) le feuil de peinture de base appliqué dans l'étape (1) est séché,
(3) on applique sur le feuil de peinture de base séché dans l'étape (2) un vernis transparent de finition non aqueux, qui contient

(A) une résine polyacrylate contenant des groupes hydroxy et
(B) un agent de réticulation,

et ensuite
(4) couche de peinture de base et couche de vernis de finition sont séchées ensemble au four,

**caractérisé en ce que**, dans l'étape (3), on applique un vernis transparent non aqueux de finition, qui contient, en tant que composant (A), une résine polyacrylate contenant des groupes hydroxy et, en tant que composant (B), un mélange de résine aminoplaste et de polyisocyanates, la résine polyacrylate contenant des groupes hydroxy pouvant être obtenue par polymérisation

(a) de 10 à 51 % en poids d'acrylate de 4-hydroxy-n-butyle ou de méthacrylate de 4-hydroxy-n-butyle ou d'un mélange d'acrylate de 4-hydroxy-n-butyle et de méthacrylate de 4-hydroxy-n-butyle,
(b) de 0 à 36 % en poids d'un ester de l'acide acrylique contenant des groupes hydroxy ou d'un ester de l'acide méthacrylique contenant des groupes hydroxy, différents de (a), ou d'un mélange de tels monomères,

(c) de 28 à 85 % en poids d'un ester aliphatique ou cycloaliphatique de l'acide méthacrylique comportant au moins 4 atomes de carbone dans le fragment alcool, différent de (a) et (b), ou d'un mélange de tels monomères,

(d) de 0 à 3 % en poids d'un acide carboxylique à insaturation éthylénique ou d'un mélange d'acides carboxyliques à insaturation éthylénique, et

(e) de 0 à 20 % en poids d'un monomère à insaturation éthylénique, différent de (a), (b), (c) et (d), ou d'un mélange de tels monomères,

conduisant à une résine polyacrylate ayant un indice de groupes hydroxy de 60 à 200, un indice d'acide de 0 à 35 et une masse moléculaire moyenne en nombre de 1 500 à 10 000, la somme des parties en poids des composants (a), (b), (c), (d) et (e) donnant toujours 100 % en poids, et la composition du composant (c) étant choisie de manière que, dans le cas de la polymérisation seule du composant (c), on obtienne une résine polyméthacrylate ayant une température de transition vitreuse de +10 à +100°C.

2. Peintures non aqueuses contenant

(A) une résine polyacrylate contenant des groupes hydroxy et
(B) un agent de réticulation,

**caractérisées en ce que** le composant (A) est une résine polyacrylate contenant des groupes hydroxy et le composant (B) est un mélange de résines aminoplaste et de polyisocyanates, la résine polyacrylate contenant des groupes hydroxy pouvant être obtenue par polymérisation

(a) de 10 à 51% en poids d'acrylate de 4-hydroxy-n-butyle ou de méthacrylate de 4-hydroxy-n-butyle ou d'un mélange d'acrylate de 4-hydroxy-n-butyle et de méthacrylate de 4-hydroxy-n-butyle,

(b) de 0 à 36 % en poids d'un ester de l'acide acrylique contenant des groupes hydroxy ou d'un ester de l'acide méthacrylique contenant des groupes hydroxy, différents de (a), ou d'un mélange de tels monomères,

(c) de 28 à 85 % en poids d'un ester aliphatique ou cycloaliphatique de l'acide méthacrylique comportant au moins 4 atomes de carbone dans le fragment alcool, différent de (a) et (b), ou d'un mélange de tels monomères,

(d) de 0 à 3 % en poids d'un acide carboxylique à insaturation éthylénique ou d'un mélange d'acides carboxyliques à insaturation éthylénique, et

(e) de 0 à 20 % en poids d'un monomère à insaturation éthylénique, différent de (a), (b), (c) et (d), ou d'un mélange de tels monomères,

conduisant à une résine polyacrylate ayant un indice de groupes hydroxy de 60 à 200, un indice d'acide de 0 à 35 et une masse moléculaire moyenne en nombre de 1 500 à 10 000, la somme des parties en poids des composants (a), (b), (c), (d) et (e) donnant toujours 100 % en poids, et la composition du composant (c) étant choisie de manière que, dans le cas de la polymérisation seule du composant (c), on obtienne une résine polyméthacrylate ayant une température de transition vitreuse de +10 à +100°C.

3. Procédé ou peintures selon la revendication 1 ou 2, **caractérisé(es) en ce que** le composant (e) est choix de manière que dans le cas de la polymérisation seule du composant (e), on obtienne un polymère ayant une température de transition vitreuse de +70 à +120°C.

4. Procédé ou peintures selon l'une quelconque des revendications 1 à 3, **caractérisé(s) en ce que** la résine polyacrylate contenant des groupes hydroxy peut être obtenue par polymérisation de 25 à 41 % en poids du composant (a), de 0 à 20 % en poids du composant (b), de 40 à 70 % en poids du composant (c), de 0 à 2 % en poids du composant (d) et de 5 à 15% en poids du composant (e), conduisant à une résine polyacrylate ayant un indice de groupes hydroxy de 100 à 160, un indice d'acide de 0 à 25 et une masse moléculaire moyenne en nombre de 2 500 à 5 000, la composition du composant (c) étant choisie de manière que, dans le cas de la polymérisation seule du composant (c), on obtient une résine polyméthacrylate ayant une température de transition vitreuse de +20 à +60°C, et le composant (e) est choisi de manière que, dans le cas de la polymérisation seule du composant (e), on obtient un polymère ayant une température de transition vitreuse de +80 à +100°C.